# EUROPEAN PATENT APPLICATION

(11) **EP 3 030 053 A1**
(43) Date of publication of application: **08.06.2016**
(21) Application number: 15196763.5
(22) Date of filing: 27.11.2015
(51) Int. Cl.: H05B 37/02, H05B 33/08

(54) **A WIRELESS LIGHTING CONTROL SYSTEM COMPRISING DIFFERENT COMPONENTS AND A METHOD FOR INSTALLING THE SAME**

(30) Priority: 02.12.2014 DK 201400701
(71) Applicant: EURO Lumex ApS, 2970 Hørsholm (DK)
(72) Inventor: JØRGENSEN, Thomas, 2100 København Ø (DK)
(74) Representative: Kristensen, Martin Hjelm

(57) **Abstract**

A wireless lighting control system is disclosed, comprising one or more master control devices (4; 53) and one or more slave control device (7: 67) electrically connected to dimmable LED drivers (9; 52) controlling respective LED light sources (8; 59), wherein a given master control device is arranged to receive sensor signals from two or more sensor components, determine dimming control signals, control a dimmable LED driver and transmit wirelessly the determined dimming control signals, and wherein a given slave control device is arranged to receive dimming control signals wirelessly from one or more master control devices and control a dimmable LED driver. Furthermore, a master control device and a slave control device for such a control system, an LED pendant (9) to which such control devices can be electrically connected and a lighting system comprising dimmable LED drivers, to which such control devices are electrically connected, as well as a method for installing such a lighting control system are disclosed.

## Description

The present invention relates to a wireless lighting control system and a lighting system, particularly comprising a plurality of LED pendants, as well as to components of such systems and a method for installation thereof.

### Background of the invention

Because of rising energy costs and negative environmental impacts of energy usage and energy generation, there is a continuous effort to reduce energy consumption of lighting, especially in larger public and commercial office buildings. A great majority of the lighting implemented in the past in public and commercial buildings, for instance in classrooms and offices, are free-hanging pendants using compact fluorescent light tubes as the light source.

A number of different lighting control systems including occupancy sensor(s) and/or daylight sensor(s) are currently available on the market to help reduce energy usage. Occupancy sensors turn light fixtures on and off based on detected motion, whereas daylight sensors automatically adjust the light output level from light fixtures based on measured levels of natural daylight and, thereby, ensure a constant light level in the room. Some daylight sensors supports multi-zone daylight control, enabling different light output of the light fixtures in the room. This is to maintain the same light level in the room independent of the varying amount of natural daylight at different locations in the room.

While several occupancy and daylight sensing control systems have been developed, there are still a number of shortcomings with currently available lighting control systems, when it comes to being installed in existing installations. The sensors for such lighting control systems currently available on the market are mounted externally to the light fixtures and then connected to the light fixtures using new wires/cords including power as well as control signals. Furthermore, the use of daylight control sensors requires implementation of dimmable ballasts in order to be able to dim light up and down. Very few free-hanging pendants on the market today have dimmable ballast, and are therefore simple lighting devices, which can only be switched on or off.

During energy renovations of existing installations with free-hanging pendants, therefore, only occupancy sensors are implemented as energy saving measures. Daylight control is typically not implemented, as the pendants do not include dimmable ballasts.

In many older electrical installations, only line and neutral mains wires are available. In many countries new safety regulations requires new wiring infrastructure including an earth wire to be made, when changes are made to the existing wiring infrastructure. This also includes implementation of occupancy and daylight control devices. For energy renovations, this dramatically increases the overall installation costs, both in terms of materials and the time used by professional installers, and thereby significantly increases the "return of investment" time for such projects. Therefore, occupancy sensing and daylight control is most often not implemented during energy renovation of lighting systems with free-hanging pendants.

### Brief description of the invention

It is an object of the present invention to provide a lighting system and a control system for the same, which overcomes the above-mentioned disadvantages of systems known in the art.

The present invention relates to a wireless lighting control system comprising one or more master control devices and one or more slave control device, each of which master control devices and slave control devices is electrically connected to a dimmable LED driver controlling an LED light source of a lighting system, wherein each master control device or slave control device is designed as a physical module unit, which is physically attached, preferably releasably attached, to the LED light source, to the dimmable LED driver of which it is electrically connected, wherein a given master control device is arranged to receive sensor signals from two or more sensor components including a PIR (passive infrared) sensor component and a daylight sensor component, determine, taking into account the received sensor signals, dimming control signals representative for desired settings of dimmable LED drivers electrically connected to master control devices and slave control devices of the lighting control system in order to obtain a predetermined desired light level in an area around the LED light sources controlled by these dimmable LED drivers, control the dimmable LED driver, to which the given master control device is electrically connected, in accordance with the determined dimming control signals, and transmit wirelessly to other master control devices and/or one or more slave control devices the determined dimming control signals related to the dimmable LED driver, to which this specific master control device or slave control device is electrically connected, and wherein a given slave control device is arranged to receive dimming control signals wirelessly from one or more master control devices and control the dimmable LED driver, to which the given slave control device is electrically connected, in accordance with the received dimming control signals.

Such a lighting control system is advantageous in that it can be configured in a variety of different ways by choosing the number and locations of the master control devices and slave control devices, respectively, dependant on the desired number and distribution of different light zones and occupancy zones checked for motion in the area being controlled.

The use of a master/slave concept means, that many (typically the majority) of the light source of the lighting system being controlled can be controlled by a slave control device with reduced functionality, which is much less expensive than a master control device with full functionality. Thus, installation costs are reduced. The use of control devices, which are able to communicate wirelessly, and the fact that the existing wiring for the light sources can be reused significantly reduce the wiring work and, thereby, the costs related to installation of the system.

The control of the dimmable LED drivers performed by the control devices is to be understood to include switching on and off the LED light sources controlled by the dimmable LED drivers, assuming that the dimmable LED drivers are connected to the mains supply at all times.

In an embodiment of the invention, the two or more sensor components are integrated in the one or more master control devices.

Integrating the sensors in the master control devices reduces the number of components of the lighting control system and, thereby, the complexity of the installation thereof.

In an embodiment of the invention, a given master control device is further arranged to receive control signals wirelessly, for instance from other master control devices, from a manually operated light switch or from a remote control system for the lighting control system, determine, taking into account the received control signals, dimming control signals representative for desired settings of dimmable LED drivers electrically connected to master control devices and slave control devices of the lighting control system in order to obtain a predetermined desired light level in an area around the LED light sources controlled by these dimmable LED drivers, control the dimmable LED driver, to which the given master control device is electrically connected, in accordance with the determined dimming control signals, and transmit wirelessly to other master control devices and/or one or more slave control devices the determined dimming control signals related to the dimmable LED driver, to which this specific master control device or slave control device is electrically connected.

This increases the flexibility of the lighting control system, which can either be operated as a stand-alone system with preprogrammed master control devices, as a partly manually controlled system or as a system controlled by a remote control system. The term "remote control system" is to be understood broadly including, for instance, manually operated remote controls as well as centralised computer-controlled building automation systems and the like.

In an embodiment of the invention, a given master control device or slave control device is further arranged to be able to monitor and register the energy consumption of the master control device or slave control device itself, the LED light source and the dimmable LED driver, to which the master control device or slave control device is electrically connected.

Monitoring and registration the energy consumption of the individual unit with a master control device or a slave control device, a dimmable LED drivers and a LED light source enables, for instance, documentation of energy savings and identification of defects and irregularities within the individual LED light source as well as in the lighting system as a whole.

In an embodiment of the invention, a given master control device or slave control device is further provided with a relay or another type of switch enabling the master control device or slave control device to cut off the energy supply to the dimmable LED driver, which it controls.

Enabling the control device to cut off the energy supply to its respective dimmable LED driver means that any standby consumption of the LED driver can be avoided, because it can simply be disconnected from the energy supply, whenever it is not in use.

In another aspect of the invention, it relates to a master control device for a wireless lighting control system, which master control device is designed as a physical module unit arranged to be physically attached, preferably releasably attached, to an LED light source controlled by a dimmable LED driver, to which the master control device is electrically connected, receive sensor signals from two or more sensor components including a PIR (passive infrared) sensor component and a daylight sensor component, determine, taking into account the received sensor signals, dimming control signals representative for desired settings of dimmable LED drivers electrically connected to master control devices and slave control devices of the lighting control system in order to obtain a predetermined desired light level in an area around LED light sources controlled by these dimmable LED drivers, control the dimmable LED driver, to which the master control device is electrically connected, in accordance with the determined dimming control signals, and transmit wirelessly to other master control devices and/or one or more slave control devices the determined dimming control signals related to the dimmable LED driver, to which this specific master control device or slave control device is electrically connected.

In an embodiment of the invention, the two or more sensor components are integrated in the master control device.

In an embodiment of the invention, the master control device is further arranged to receive control signals wirelessly, for instance from other master control devices, from a manually operated light switch or from a remote control system for a lighting control system, determine, taking into account the received control signals, dimming control signals representative for desired settings of dimmable LED drivers electrically connected to master control devices and slave control devices of the lighting control system in order to obtain a predetermined desired light level in an area around the LED light sources controlled by these dimmable LED drivers, control the dimmable LED driver, to which the master control device is electrically connected, in accordance with the determined dimming control signals, and transmit wirelessly to other master control devices and/or one or more slave control devices the determined dimming control signals related to the dimmable LED driver, to which this specific master control device or slave control device is electrically connected.

In yet another aspect of the invention, it relates to a slave control device for a wireless lighting control system, which slave control device is designed as a physical module unit arranged to be physically attached, preferably releasably attached, to an LED light source controlled by a dimmable LED driver, to which the slave control device is electrically connected, receive dimming control signals wirelessly from one or more master control device with which the slave control device is associated, and control the dimmable LED driver, to which the slave control device is electrically connected, in accordance with the received dimming control signals.

In a further aspect of the invention, it relates to an LED pendant comprising an LED light source, a dimmable LED driver and one or more connectors by means of which a master control device or a slave control device of a wireless lighting control system as described above can be electrically connected and physically attached to the LED pendant for controlling the dimmable LED driver thereof, all necessary electrical connections to the master control device or the slave control device passing through the one or more connectors.

Such an LED pendant is advantageous in that it can replace an existing common pendant using the existing suspension system and mains wiring, when an energy renovation is performed, thus allowing daylight control to be implemented in the renovated lighting system without requiring any changes in the wiring of the electrical installation.

Attaching the master control device or the slave control device to the LED pendant enables for a very simple installation process.

In an embodiment of the invention, the LED pendant is designed in such a way that the master control device or the slave control device can be releasably attached to the LED pendant, to which it is electrically connected.

Attaching the master control device or the slave control device releasably to the LED pendant further ensures a great flexibility, should it be desired to change the configuration of master control devices and slave control devices used in the system.

In an embodiment of the invention, the LED pendant is arranged to function as a common pendant, which can simply be switched on or off, when no master control device or slave control device is electrically connected thereto.

This means that existing pendants can simply be replaced by the less energy-consuming LED pendants for saving energy, even if no lighting control system with master control devices and slave control devices is implemented. It also means, that a full energy renovation can be performed in two steps by first replacing the pendants and the later installing the lighting control system.

In a further aspect of the invention, it relates to a lighting system comprising a plurality of LED light sources being controlled by respective dimmable LED drivers, to each of which is connected a master control device or a slave control device of a wireless lighting control system as described above.

In an embodiment of the invention, the lighting system comprises a plurality of LED pendants as described above.

In a final aspect of the invention, it relates to a method for installing a lighting control system as described above, which method comprises the steps of installing a plurality of LED pendants as described above, and installing one or more master control devices and one or more slave control devices of the lighting control system by connecting them electrically and attaching them physically to the respective LED pendants.

In an embodiment of the invention, the plurality of LED pendants are installed as a replacement for existing pendants of a lighting system.

This method is very advantageous in that it allows for an infield configuration of the master control devices and slave control devices. This means that the distribution of master control devices and slave control devices can be decided and changed after the completion of the wiring and installation of the light sources of the lighting system.

In an embodiment of the invention, the master control devices and the slave control devices are releasably attached to the respective LED pendants.

### The figures

In the following, a few exemplary embodiments of the invention are described in more detail with reference to the figures, of which
- Fig. 1: illustrates schematically an example of a lighting system according to an embodiment of the invention,
- Fig. 2a: illustrates schematically the switching on and off of the light sources of a lighting system according to an embodiment of the invention,
- Fig. 2b: illustrates schematically the switching on and off of the light sources and the possibility of overriding the automatic light level settings of a lighting system according to another embodiment of the invention,
- Fig. 3a: illustrates schematically the control of the light levels in different light zones of a lighting system according to an embodiment of the invention,
- Fig. 3b: illustrates schematically the control of the light levels in different light zones of a lighting system according to another embodiment of the invention,
- Fig. 4: illustrates schematically an LED pendant according to an embodiment of the invention,
- Fig. 5: illustrates schematically a master control device of a lighting control system according to an embodiment of the invention,
- Fig. 6: illustrates schematically a slave control device of a lighting control system according to an embodiment of the invention,
- Figs. 7a-7c: illustrate schematically the connection of a master control device and a slave control device, respectively, to an LED pendant according to an embodiment of the invention,
- Figs. 8a-8b: illustrate schematically an LED panel with a master control device of a lighting control system according to an embodiment of the invention,
- Fig. 9a: illustrates schematically a master control device of a lighting control system according to an embodiment of the invention, and
- Fig. 9b: illustrates schematically a slave control device of a lighting control system according to an embodiment of the invention.

### Detailed description of the invention

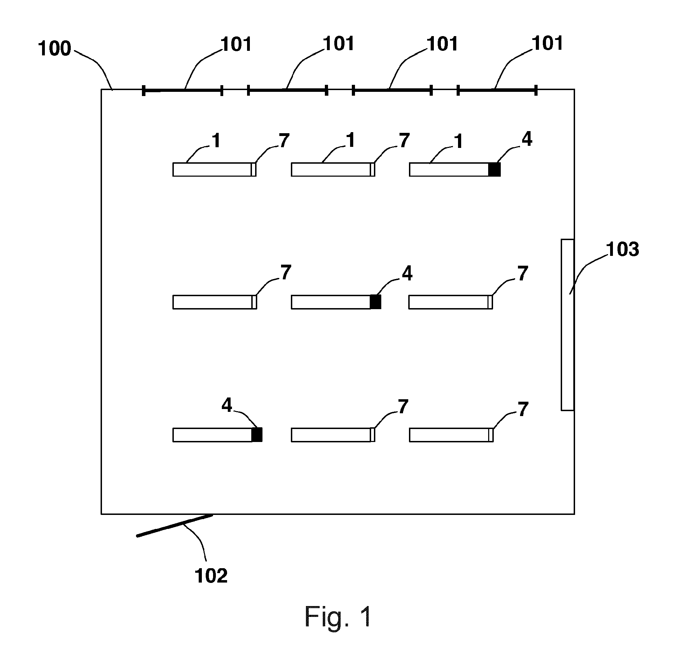

Fig. 1 illustrates schematically an example of a lighting system according to an embodiment of the invention. The illustrated lighting system is installed in a classroom 100 with four windows 101, a door 102 and a whiteboard 103 on the wall. The lighting system comprises nine LED pendants 1, three of which are equipped with a master control device 4 and six of which are equipped with a slave control device 7 of a lighting control system according to the invention.

The master control devices 4 comprises PIR sensor components 13 (not shown in this figure) and daylight sensor components 14 (not shown in this figure) and can, therefore, detect movements in the classroom 100 as well as measure the light level. The figure illustrates how a plurality of master control devices 4 can be used in the same lighting system for detecting movements and measuring light level at different positions within the classroom 100.

The slave control devices 7, on the other hand, comprise no sensor components but are wirelessly controlled by the master control devices 4.

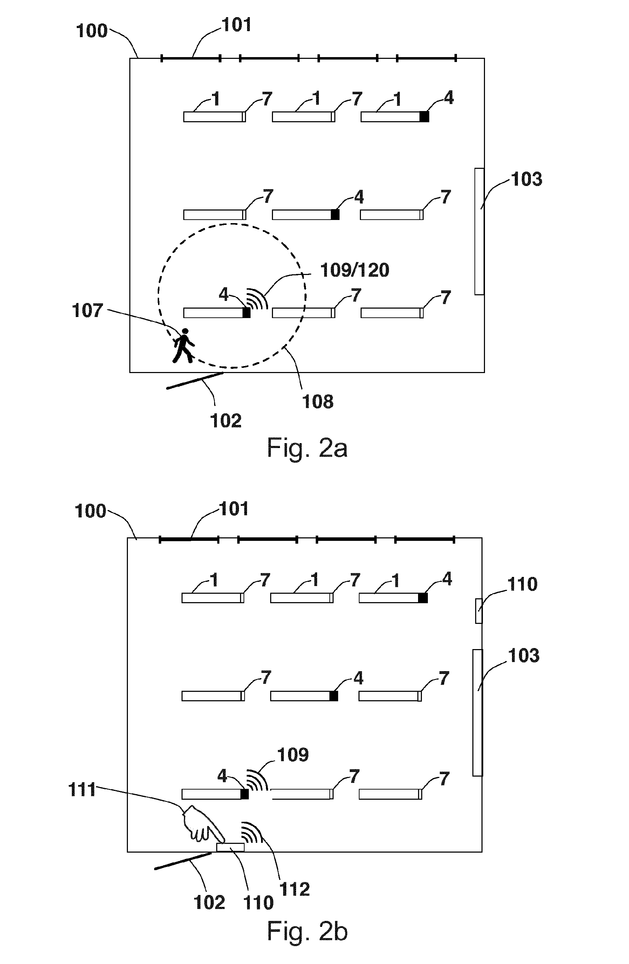

Fig. 2a illustrates schematically the switching on and off of the light sources of a lighting system according to an embodiment of the invention.

In the illustrated example, the PIR sensor component 13 (not shown in this figure) of the master control device 4 attached to the LED pendant 1 closest to the door 102 detects a human entrance 107 into the PIR detection area 108 controlled by this specific PIR sensor component 13.

This causes this master control device 4 to send automatically a wireless switch 'ON' signal 120 to the slave control devices 7 controlled by this master control device 4 as well as to the other master control devices 4 of the lighting control system. These other master control devices 4, in turn, send a wireless switch 'ON' signal to the slave control devices 7 controlled by them, respectively. Alternatively, the first master control device 4 sends the wireless switch 'ON' signal directly to all master control devices 4 and slave control devices 7 in the lighting control system. All LED pendants 1, the respective dimmable LED drivers 9 (not shown in this figure) of which are controlled by the respective master control devices 4 and slave control devices 7 electrically connected thereto, are therefore switched on.

As long as the PIR sensor component 13 of at least one of the master control devices 4 detects movements within the classroom 100, the light will remain switched on. After a predefined period of time, during which none of the PIR sensor components 13 have detected motion, a wireless switch 'OFF' signal 109 is automatically sent to the master control devices 4 and slave control devices 7 of all the LED pendants 1 in the classroom 100 and the light is switched off.

Fig. 2b illustrates schematically the switching on and off of the light sources of a lighting system according to another embodiment of the invention.

The lighting control system illustrated in this figure is slightly different from the system shown in Fig. 2a in that two wireless manual override switches 110 are arranged on the walls of the classroom 100 next to the door 102 and next to the whiteboard 103.

When one of these manual switches are pressed 111, a wireless signal 112 is sent to at least one master control device 4 of the lighting control system. Depending on the type of manual switch 110 and the way it is pressed 111, this wireless signal 112 can be used to override the automatic lighting control system. Thus, by pressing 111 the manual switch 110, a user can force the light to be switched on or off or regulate the dimming of the light sources of the lighting system. The master control device(s) 4 receiving the wireless signal 112 from the manual switch 110 distribute(s) the relevant commands wirelessly to the other master control devices 4 and slave control devices 7 of the lighting control system in order to bring into effect the response of the lighting system desired by the user. Alternatively, the manual switch 110 sends the wireless signal 112 directly to all master control devices 4 and slave control devices 7 in the lighting control system.

Because the manual switches 110 are wireless, no further wiring is needed.

In a similar way, wireless signals to and from a remote control system (not shown), such as a manually operated remote control or a computer-controlled building automation systems and the like, can be used to monitor and override the automatic functions of the lighting control system. In general, the wireless communication is arranged to go both ways, both for master control devices 4 and slave control devices 7, so that there is a possibility to report operational statuses and other relevant information "backwards" in the system for monitoring purposes.

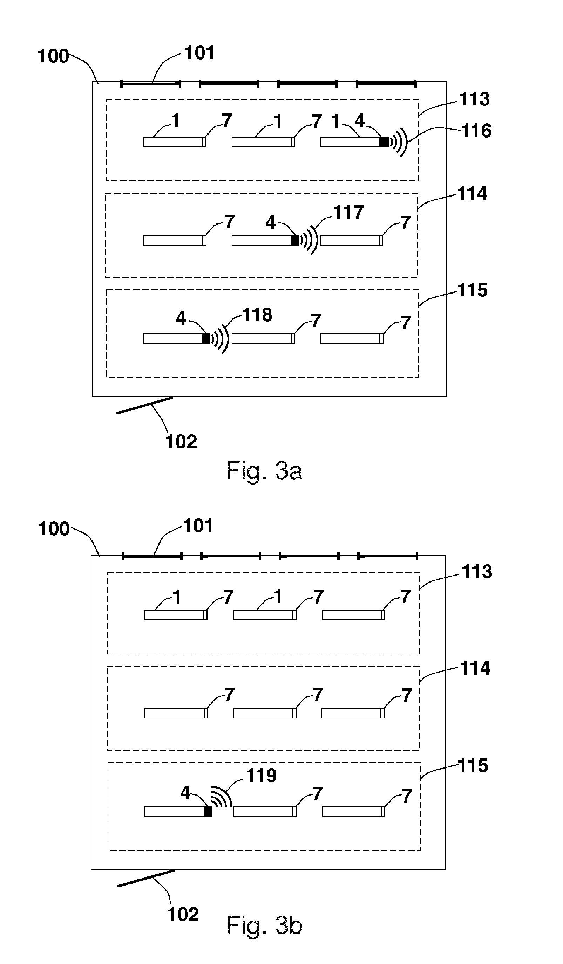

Fig. 3a illustrates schematically the control of the light levels in different light zones 113, 114, 115 of a lighting system according to an embodiment of the invention.

In the illustrated configuration, each of the light zones 113, 114, 115 comprises an LED pendant 1 equipped with a master control device 4. There is more natural day light near the windows 101 than near the door 102 of the illustrated classroom 100. Therefore, if a given resulting light level throughout the classroom 100 is desired, more light must be emitted from the LED pendants 1 in the light zone 115 nearest the door 102 than from the LED pendants 1 in the light zone 113 nearest the windows 101.

The daylight sensor component 14 (not shown in this figure) of the master control device 4 in the light zone 113 nearest the windows 101 measures the light level in this light zone 113. The measured light level is used to determine a wireless light level signal 116 for this light zone 113, which is send wirelessly to the slave control devices 7 in this light zone 113 commanding them to dim the light from the LED pendants 1 in this light zone 113 to, for example, 20 % of the maximum level.

In order to obtain a constant light level throughout the classroom 100, the master control devices 4 of the two other light zones 114, 115 will have to measure the light levels in their respective light zones 114, 115 and send out other wireless light level signals 117, 118, respectively. For instance, they may command the LED pendants 1 of the respective light zones 114, 115 to be dimmed to 40 % and 60 % of the maximum level, respectively.

Fig. 3b illustrates schematically the control of the light levels in different light zones 113, 114, 115 of a lighting system according to another embodiment of the invention.

In this configuration, there is only one master control device 4 in the lighting system. Still, however, three different light zones 113, 114, 115 can be obtained. In this case, only the light level in the light zone 115 nearest the door 102 is measured. Taking into account the geometry of the classroom 100 and the light distribution therein, the master control device 4 has been programmed to send out a common wireless light level signal 119 to all the slave control devices 7 in the classroom 100. This common light level signal 119 comprises different commands to the slave control devices 7 of the different light zones 113, 114, 115, respectively. Thus, the common light level signal 119 may command the slave control devices 7 of the three light zones 113, 114, 115 to dim the light from the LED pendants 1 in the respective light zones 113, 114, 115 to, for instance, 20 %, 40 % and 60 %, respectively, of the maximum level.

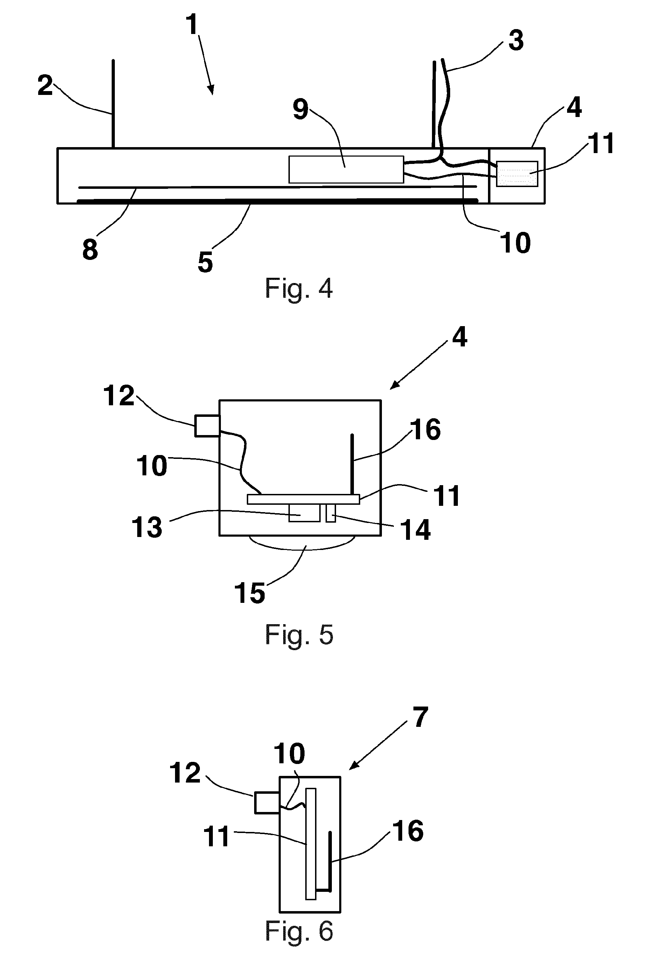

Fig. 4 illustrates schematically an LED pendant 1 according to an embodiment of the invention. The illustrated LED pendant 1 is suspended from a couple of suspension wires 2 and powered through a mains power cord 3. It comprises an LED light source 8, the output of which is controlled by a dimmable LED driver 9. This dimmable LED driver 9 is controlled, in turn, by a master control device 4 through dimming control interface wires 10. Furthermore, a LED light lens 5 covering the LED light source 8 is schematically illustrated in the figure.

The master control device 4, which comprises an electronic circuit board 11, is attached to the LED pendant 1 and powered by the mains power cord 3 thereof. Thus, the master control device 4 needs no external cabling, as the mains power cord 3 is already present within the LED pendant 1 to which the master control device 4 is attached.

Fig. 5 illustrates schematically a master control device 4 of a lighting control system according to an embodiment of the invention. It is shown, how the master control device 4 comprises an electronic circuit board 11 with control circuitry, onto which electronic circuit board 11 is mounted a PIR sensor component 13, a daylight sensor component 14 and an antenna 16 for wireless transmission and reception of sensor and control signals. Furthermore, the master control device 4 comprises a PIR lens 15 and a connector 12 for connecting the dimming control interface wires 10 to the LED pendant 1 and for providing the electronic circuit board 11 with power from the LED pendant 1.

Fig. 6 illustrates schematically a slave control device 7 of a lighting control system according to an embodiment of the invention. This figure illustrates how the slave control device 7 comprises only some of the components of the master control device 4, namely the electronic circuit board 11 with (a simpler) control circuitry, the dimming control interface wires 10, the connector 12 and the antenna 16.

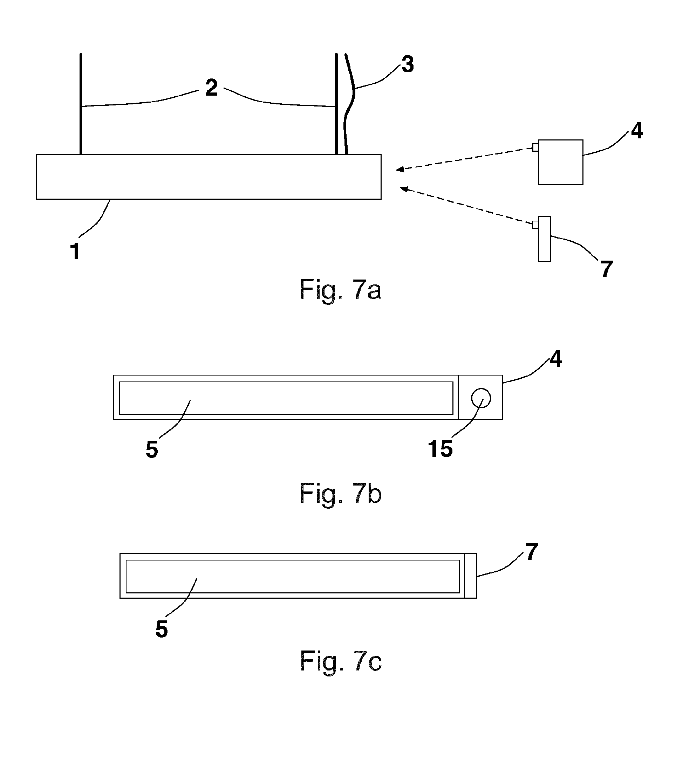

Figs. 7a-7c illustrate schematically the connection of a master control device 4 and a slave control device 7, respectively, to an LED pendant 1 according to an embodiment of the invention.

Fig. 7a illustrates in a side view how an LED pendant 1 prepared for being connected with a master control device 4 or a slave control device 7 can easily replace an existing common pendant. The only necessary operations to make such a replacement is to disconnect the suspension wires 2 and the mains power cord 3 from the existing pendant and connect them to the LED pendant 1 instead.

Figs. 7b and 7c show the difference between bottom views of LED pendants 1 with a master control device 4 and a slave control device 7, respectively, attached. The LED pendant 1 itself with the LED light lens 5 is the same, but the slave control device 7 in Fig. 7c is narrower than the master control device 4 in Fig. 7b and lacks the PIR lens 15 thereof.

In other embodiments of the invention (not shown), a master control device or a slave control device can be physically integrated within an LED pendant.

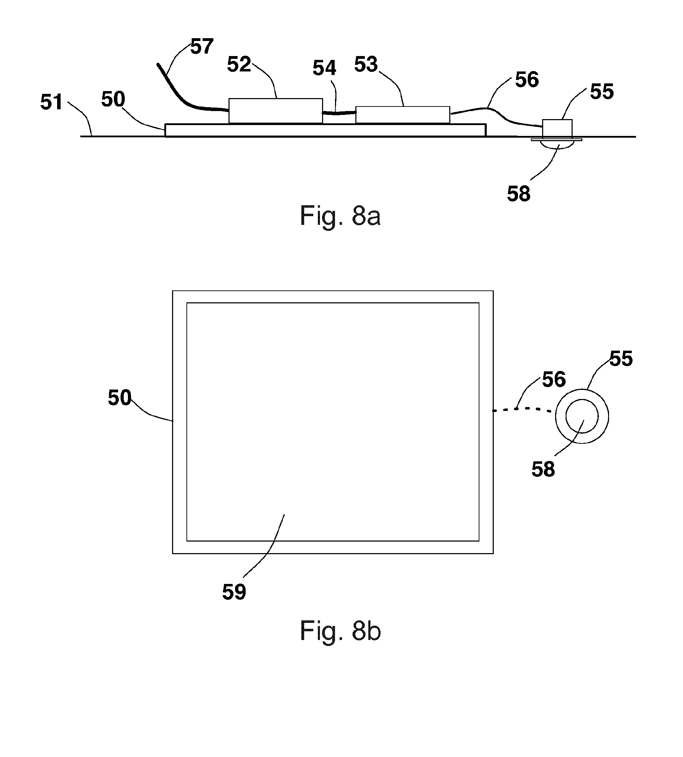

Figs. 8a-8b illustrate schematically a side view and a bottom view, respectively, of an LED panel 50 with a master control device 53 of a lighting control system according to an embodiment of the invention. In this case, the master control device 53 is physically mounted onto the LED panel 50, which is, in turn, mounted in a dropped ceiling 51.

An external sensor 55 with a PIR lens 58 is mounted separately in the dropped ceiling 51 and provides the master control device 53 with sensor signals through low-voltage control interface cables 56.

The dimmable LED driver 52 of the LED panel 50 is supplied through a mains cable 57 and connected to the master control device 53 with mains/dimming control interface cables 54. Thus, apart from the fact that an external sensor 55 is used and that the master control device 53 is hidden behind a fixed LED panel 50 rather than being easily accessible and releasably attached to an LED pendant 1, this system is similar to the one illustrated in Fig. 4 and allows the reuse of the existing mains power cabling infrastructure.

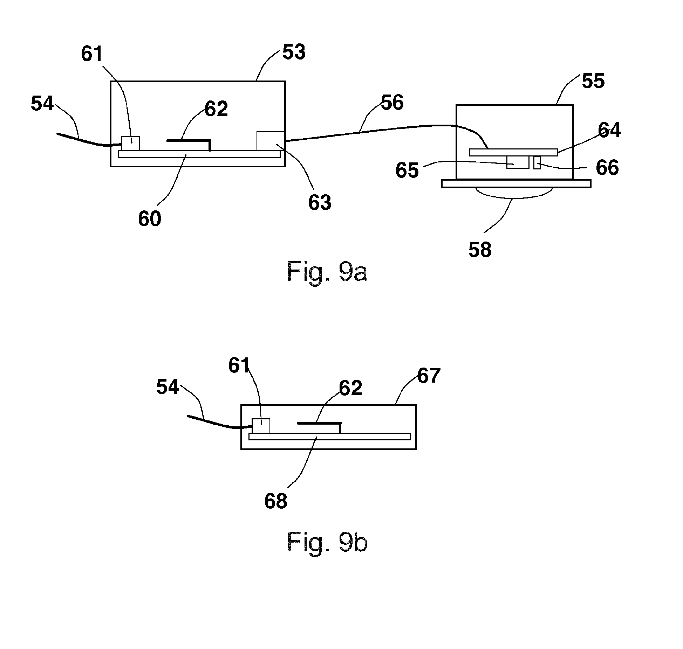

Fig. 9a illustrates schematically a more detailed illustration of the master control device 53 and the external sensor 55 shown in Fig. 8a.

Similarly to the master control device 4 shown in Fig. 5, the master control device 53 in this figure comprises an electronic circuit board 60 with control circuitry, onto which electronic circuit board 11 is mounted an antenna 62 for wireless transmission and reception of sensor and control signals. Furthermore, the master control device 53 comprises two connectors 61, 63 mounted on the electronic circuit board 60 for connection of the mains/dimming control interface cables 54 and the low-voltage control interface cables 56, respectively.

The external sensor 55 comprises a PIR lens 58 and another electronic circuit board 64, onto which a PIR sensor component 65 and a daylight sensor component 66 are mounted.

As shown in Figs. 1-7c, a lighting system according to an embodiment of the present invention can comprise a plurality of LED pendants 1 equipped with either a master control device 4 or a slave control device 7. Similarly, a lighting system according to another embodiment of the invention can comprise a plurality of LED panels 50 as the one shown in Fig. 8a and 8b equipped with either a master control device 53 or a slave control device 67. Fig. 9b illustrates schematically a slave control device 67 of a lighting control system for such a lighting system.

This slave control device 67 is similar to the master control device 53 apart from the fact that there in no low-voltage signal connector 63 and that the electronic circuit board 68 of the slave control device 67 is equipped with a simpler control circuitry than that of the master control device 53.

In some embodiments of the invention, any given master control device 4, 53 or slave control device 7, 67 is capable of monitoring and registering the energy consumption of the master control device 4, 53 or slave control device 7, 67 itself, the LED light source 8, 59 and the dimmable LED driver 9, 52, to which the master control device 4, 53 or slave control device 7, 67 is electrically connected. This means, for instance, that:
- Energy savings can be documented, which is important for so-called ESCO (energy service company or energy savings company) suppliers of electrical equipment, whose fees often depends on the obtained energy savings
- Defects and irregularities in the lighting system as a whole as well as in the individual LED light sources 8, 59 can easily be detected and located (for instance if an LED light source 8, 59 has no energy consumption although it is supposed to be switched on or if an LED light source 8, 59 has a certain energy consumption although it is supposed to be switched off)
- LED light sources 8, 59 can be automatically switched off if the last person leaving the room seems to have forgotten it

In some embodiments of the invention, any given master control device 4, 53 or slave control device 7, 67 is provided with a relay or another type of switch (not shown) enabling the master control device 4, 53 or slave control device 7, 67 to cut off the energy supply to the dimmable LED driver 9, 52, which it controls.

Under normal conditions, an LED driver 9, 52 has a standby consumption of typically 0.3-0.5 W when the LED light source 8, 59 it controls is switched off. The master control devices 4, 53 and slave control devices 7, 67 of the present invention have similar standby consumptions. Thus, enabling the master control device 4, 53 and slave control devices 7, 67 to cut off the energy supply to their respective dimmable LED drivers 9, 52 whenever the corresponding LED light sources 8, 59 are switched off means that the standby consumption of these LED light sources 8, 59 can roughly be reduced by half.

### List of reference numbers

1. LED pendant
2. Suspension wire
3. Mains power cord
4. Master control device
5. LED light lens
7. Slave control device
8. LED light source
9. Dimmable LED driver
10. Dimming control interface wires
11. Electronic circuit board
12. Connector
13. PIR sensor component
14. Daylight sensor component
15. PIR lens
16. Antenna
50. LED panel
51. Dropped ceiling
52. Dimmable LED driver
53. Master control device
54. Mains/dimming control interface cables
55. External sensor
56. Low voltage control interface cables
57. Mains cable
58. PIR lens
59. LED light source
60. Electronic circuit board - Master control device
61. Mains/dimming control interface connector
62. Antenna
63. Low voltage signal connector
64. Electronic circuit board - External sensor
65. PIR sensor component
66. Daylight sensor component
67. Slave control device
68. Electronic circuit board - Slave control device 100. Classroom
101. Window
102. Door
103. Whiteboard
107. Human entrance
108. PIR detection area
109. Automatic switch 'OFF' wireless signal
110. Wireless manual override switch
111. Manual switch 'ON' press
112. Manual switch 'ON' wireless signal
113. Light zone 1
114. Light zone 2
115. Light zone 3
116. Wireless light level signal - Light zone 1
117. Wireless light level signal - Light zone 2
118. Wireless light level signal - Light zone 3
119. Wireless light level signal - Light zones 1+2+3
120. Automatic switch 'ON' wireless signal

## Claims

1. A wireless lighting control system comprising one or more master control devices (4; 53) and one or more slave control device (7: 67), each of which master control devices and slave control devices is electrically connected to a dimmable LED driver (9; 52) controlling an LED light source (8; 59) of a lighting system,
wherein each master control device or slave control device is designed as a physical module unit, which is physically attached, preferably releasably attached, to the LED light source, to the dimmable LED driver of which it is electrically connected,
wherein a given master control device is arranged to
receive sensor signals from two or more sensor components including a PIR (passive infrared) sensor component (13; 65) and a daylight sensor component (14; 66),
determine, taking into account the received sensor signals, dimming control signals representative for desired settings of dimmable LED drivers (9; 52) electrically connected to master control devices and slave control devices of the lighting control system in order to obtain a predetermined desired light level in an area around the LED light sources controlled by these dimmable LED drivers,
control the dimmable LED driver, to which the given master control device is electrically connected, in accordance with the determined dimming control signals, and
transmit wirelessly to other master control devices and/or one or more slave control devices the determined dimming control signals related to the dimmable LED driver, to which this specific master control device or slave control device is electrically connected, and
wherein a given slave control device is arranged to
receive dimming control signals wirelessly from one or more master control devices and
control the dimmable LED driver, to which the given slave control device is electrically connected, in accordance with the received dimming control signals.

2. The lighting control system according to claim 1, wherein the two or more sensor components are integrated in the one or more master control devices.

3. The lighting control system according to claim 1 or 2, wherein a given master control device is further arranged to
receive control signals wirelessly, for instance from other master control devices, from a manually operated light switch (110) or from a remote control system for the lighting control system,
determine, taking into account the received control signals, dimming control signals representative for desired settings of dimmable LED drivers (9; 52) electrically connected to master control devices and slave control devices of the lighting control system in order to obtain a predetermined desired light level in an area around the LED light sources controlled by these dimmable LED drivers,
control the dimmable LED driver, to which the given master control device is electrically connected, in accordance with the determined dimming control signals, and
transmit wirelessly to each of the one or more slave control devices associated with the given master control device the determined dimming control signals related to the dimmable LED driver, to which this specific slave control devices is electrically connected.

4. The lighting control system according to any of the preceding claims, wherein a given master control device or slave control device is further arranged to be able to monitor and register the energy consumption of the master control device or slave control device itself, the LED light source and the dimmable LED driver, to which the master control device or slave control device is electrically connected.

5. The lighting control system according to any of the preceding claims, wherein a given master control device or slave control device is further provided with a relay or another type of switch enabling the master control device or slave control device to cut off the energy supply to the dimmable LED driver, which it controls.

6. A master control device (4; 53) for a wireless lighting control system, which master control device is designed as a physical module unit arranged to
be physically attached, preferably releasably attached, to an LED light source (8; 59) controlled by a dimmable LED driver (9; 52), to which the master control device is electrically connected,
receive sensor signals from two or more sensor components including a PIR (passive infrared) sensor component (13; 65) and a daylight sensor component (14; 66),
determine, taking into account the received sensor signals, dimming control signals representative for desired settings of dimmable LED drivers (9; 52) electrically connected to master control devices and slave control devices (7; 67) of the lighting control system in order to obtain a predetermined desired light level in an area around LED light sources (8; 59) controlled by these dimmable LED drivers,
control the dimmable LED driver, to which the master control device is electrically connected, in accordance with the determined dimming control signals, and
transmit wirelessly to other master control devices and/or one or more slave control devices the determined dimming control signals related to the dimmable LED driver, to which this specific master control device or slave control device is electrically connected.

7. The master control device according to claim 6, wherein the two or more sensor components are integrated in the master control device.

8. The master control device according to claim 6 or 7, wherein the master control device is further arranged to
receive control signals wirelessly, for instance from other master control devices, from a manually operated light switch (110) or from a remote control system for a lighting control system,
determine, taking into account the received control signals, dimming control signals representative for desired settings of dimmable LED drivers (9; 52) electrically connected to master control devices and slave control devices of the lighting control system in order to obtain a predetermined desired light level in an area around the LED light sources controlled by these dimmable LED drivers,
control the dimmable LED driver, to which the master control device is electrically connected, in accordance with the determined dimming control signals, and
transmit wirelessly to other master control devices and/or one or more slave control devices the determined dimming control signals related to the dimmable LED driver, to which this specific master control device or slave control device is electrically connected.

9. A slave control device (7; 67) for a wireless lighting control system, which slave control device is designed as a physical module unit arranged to
be physically attached, preferably releasably attached, to an LED light source (8; 59) controlled by a dimmable LED driver (9; 52), to which the slave control device is electrically connected,
receive dimming control signals wirelessly from one or more master control device (4; 53) with which the slave control device is associated, and
control the dimmable LED driver, to which the slave control device is electrically connected, in accordance with the received dimming control signals

10. An LED pendant (1) comprising an LED light source (8), a dimmable LED driver (9) and one or more connectors by means of which a master control device (4) or a slave control device (7) of a wireless lighting control system according to any of claims 1-5 can be electrically connected and physically attached to the LED pendant for controlling the dimmable LED driver thereof, all necessary electrical connections to the master control device or the slave control device passing through the one or more connectors.

11. The LED pendant according to claim 10, wherein the LED pendant is designed in such a way that the master control device or the slave control device can be releasably attached to the LED pendant, to which it is electrically connected.

12. The LED pendant according to claim 10 or 11, wherein the LED pendant is arranged to function as a common pendant, which can simply be switched on or off, when no master control device or slave control device is electrically connected thereto.

13. A lighting system comprising a plurality of LED light sources (8; 59) being controlled by respective dimmable LED drivers (9; 52), to each of which is connected a master control device (4; 53) or a slave control device (7; 67) of a wireless lighting control system according to any of claims 1-5.

14. The lighting system according to claim 13 comprising a plurality of LED pendants according to any of claims 10-12.

15. A method for installing a lighting control system according to any of claims 1-5, which method comprises the steps of
- installing within an area to be controlled a plurality of LED pendants (1) according to any of claims 10-12, and
- installing one or more master control devices (4) and one or more slave control devices (7) of the lighting control system by connecting them electrically and attaching them physically to the respective LED pendants.

16. The method according to claim 15, wherein the plurality of LED pendants are installed as a replacement for existing pendants of a lighting system.

17. The method according to claim 15 or 16, wherein the master control devices and the slave control devices are releasably attached to the respective LED pendants.
